# EUROPÄISCHE PATENTSCHRIFT

(11) **EP 0 893 177 B1**
(45) Veröffentlichungstag und Bekanntmachung des Hinweises auf die Patenterteilung: **22.05.2002**
(21) Anmeldenummer: 98112428.2
(22) Anmeldetag: 04.07.1998
(51) Int. Cl.: B21H 5/02, B21D 53/28, B23P 15/14

(54) **Verfahren zur Herstellung eines stirnverzahnten Werkstückes**
Method for the production of a toothed workpiece
Procédé pour la fabrication d'une pièce dentée

(30) Priorität: 19.07.1997 DE 19731056
(43) Veröffentlichungstag der Anmeldung: 27.01.1999
(73) Patentinhaber: Dynaform GmbH, 59227 Ahlen (DE)
(72) Erfinder: Stein, Bernd, 53119 Bonn (DE); Zimmermann, Wilhlem, 53757 St. Augustin (DE); Pütz, Karl-Heinz, 50859 Köln (DE); Steinhauer, Heinz, 53844 Troisdorf (DE)
(74) Vertreter: Patentanwälte Meinke, Dabringhaus und Partner

(56) Entgegenhaltungen:
- EP-A- 0 568 779
- EP-A- 0 736 347
- US-A- 4 974 309
- ROLOFF/MATEK: 'Maschinenelemente', VIEWEG * Seite 368 *

## Beschreibung

Die Erfindung betrifft ein Verfahren zur Herstellung eines stirnverzahnten Werkstückes, wie z.B. einem Metallring, auf dessen Stirnseite Verzahnungen, insbesondere solche mit langgestreckten Zähnen, aufgebracht sind.

Stirnseitig verzahnte Werkstücke werden z.B. im Fahrzeugbau benötigt, insbesondere für Sensorsysteme zur Erfassung von Rotationsbewegungen oder Rotationsgeschwindigkeiten, wie sie auch bei ABS-Anlagen verwendet werden.

Üblicherweise werden die Stirnverzahnungen bei derartigen Werkstücken mechanisch oder durch funkeninduktive Bearbeitung hergestellt. Die Werkstücke können aber auch als Sinterteil hergestellt werden, so daß. eine mechanische Bearbeitung nicht notwendig ist. Diese bekannten Herstellungsverfahren sind jedoch kostenintensiv und belasten durch die entstehenden Abfallprodukte, wie Öle, Kühlschmierstoffe, ölige Späne, bei der Fertigung Arbeitspersonal und Umwelt.

In sowohl der WO 96/20050, als auch der EP-A-0 568 779 ist die Herstellung von innenverzahnten rohrförmigen Teilen mit dem Drückwalzverfahren beschrieben. Die Herstellung von stirnverzahnten Teilen ist mit den dort beschriebenen Anordnungen nicht möglich.

Der Erfindung liegt die Aufgabe zugrunde, die Herstellung von stirnverzahnten Werkstücken, insbesondere bei Verzahnungen mit langgestreckten Zähnen, zu verbessern.

Diese Aufgabe wird mit den Merkmalen des Patentanspruchs 1 gelöst.

Die Erfindung schlägt- vor, die Stirnverzahnung des Werkstückes mit der Drückwalztechnik und einer anschließenden Drehoperation herzustellen. Zunächst wird ein Rohling zu einem hülsenförmigen innenverzahnten Halbzeug umgeformt. Die Zähne verlaufen parallel zu der Längsachse des Halbzeuges und gehen in eine Stirnwand über. In einem weiteren Schritt wird das Halbzeug zu dem fertigen stirnverzahnten Werkstück verarbeitet. Dazu wird die Umfangsfläche, welche die Zähne umgibt, abgedreht, so daß die einzelnen Zähne freigelegt werden. Die Zähne stehen nun von der Stirnwand ab. Mit dem erfindungsgemäßen Verfahren wird ein stirnverzahntes Werkstück, das üblicherweise nur schwer herzustellen ist, in zwei einfachen Schritten hergestellt. Der erste Schritt, nämlich die Herstellung einer innenverzahnten Hülse, kann mittels herkömmlicher Technik, wie z.B. der Drückwalztechnik, durchgeführt werden. Mit solchen Verfahren läßt sich auch eine langgestreckte Verzahnung, wobei die Länge eines Zahnes gegenüber seiner Breite oder Höhe relativ groß, zumindestens doppelt so groß, ist, herstellen. In einem zweiten Schritt wird die Umfangsfläche des Halbzeuges abgedreht, bis die Zähne freigelegt sind.

Der Rohling kann bereits als topfförmiges Teil für das Formwerkzeug vorgeformt sein. Vorteilhafterweise ist der Rohling als Ronde, d.h. als Scheibe oder als Ring, ausgebildet, dessen äußerer Flächenbereich über das Formwerkzeug übersteht und während des Drückwalzens auf das Formwerkzeug umgelegt wird. So kann das Verfahren mit einfach herzustellenden Rohlingen durchgeführt werden, da der Rohling während des Drückwalzens zugleich vorgeformt und verzahnt wird.

Im folgenden wird ein Ausführungsbeispiel der Erfindung anhand der Zeichnungen näher erläutert.

Es zeigen:
- Fig. 1: ein Formwerkzeug,
- Fig. 2: eine Vorrichtung zum Drückwalzen,
- Fig. 3: das Werkstück nach dem Drückwalzen,
- Fig. 4: das Werkstück während einer Drehoperation und
- Fig. 5: das fertiggestellte Werkstück mit der Stirnverzahnung.

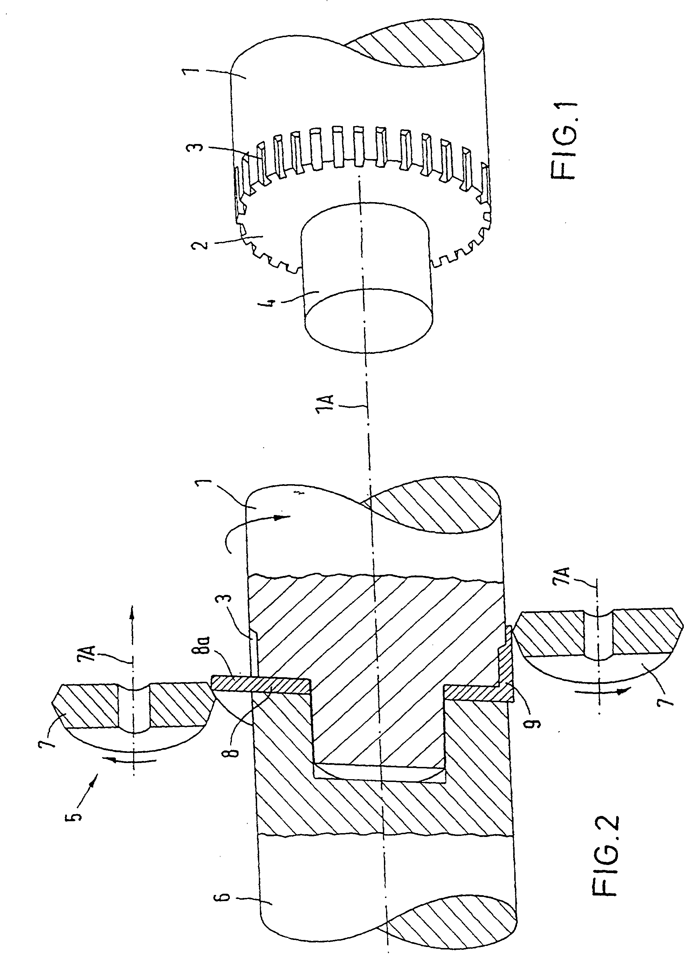

In Fig. 1 ist ein zylinderförmiges Formwerkzeug 1 dargestellt, das um seine Längsachse 1A drehend antreibbar an einer nicht dargestellten Werkzeugmaschine, die in der Figur rechts von dem Formwerkzeug 1 angeordnet ist, befestigt ist. Im Bereich der der.Werkzeugmaschine abgewandten Stirnseite 2 weist das Formwerkzeug 1 eine umfänglich angeordnete Verzahnung 3 auf. Diese Verzahnung 3 verläuft parallel zu der Längsachse 1A des Formwerkzeuges 1. Die Verzahnung 2 ist negativ, d.h. daß die Zwischenräume zwischen den einzelnen Zähnen aus der Umfangsfläche des Formwerkzeuges 1 ausgenommen sind. Die Verzahnung 3 erstreckt sich bis zu der Stirnseite 2 des Formwerkzeuges 1, so daß der Umfangsrand der Stirnseite 2 wie ein Zahnrad geformt ist. Auf der Stirnseite 2 ist mittig ein Zentrierzapfen 4 angeordnet.

In Fig. 2 ist eine Drückwalzvorrichtung 5 gezeigt, die aus dem in Fig. -1 dargestellten Formwerkzeug 1, einem reitstockseitigen Hohldorn 6 und mehreren Drückrollen 7 besteht. Der Hohldorn 6 ist derart ausgebildet, daß er auf den Zentrierzapfen 4 aufschiebbar ist und einen Rohling 8, der auf den Zentrierzapfen 4 geführt ist, klemmend an dem Formwerkzeug 1 sichern kann. Der Hohldorn 6 ist drehbar gelagert, so daß bei einer Rotation des Formwerkzeuges 1 um seine Längsachse 1A das Formwerkzeug 1, der Rohling 8 und der Hohldorn 6 eine rotierende Einheit bilden.

Die Drückrollen 7 rotieren jeweils um eine Drehachse 7A, die parallel zu der Drehachse 1A des Formwerkzeuges 1 verläuft. Die Drückrollen 7 sind also über den Umfang des Formwerkzeuges 1 verteilt. Sie können parallel und senkrecht zu der Drehachse 1A des Formwerkzeuges 1 bewegt werden.

Für die Drückwalzoperation wird zunächst ein ringförmiger Rohling 8 auf den Zentrierzapfen 4 des Formwerkzeuges 1 aufgeschoben, woraufhin der Rohling 8 mit dem Hohldorn 6 an dem Formwerkzeug 1 fixiert wird. Der Durchmesser des Rohlings 8 ist größer als der des Formwerkzeuges 1, so daß ein Rand 8a über das Formwerkzeug 1 übersteht. Nachdem das Formwerkzeug 1 und damit der Rohling 8 und der Hohldorn 6 in Rotation versetzt worden sind, werden die Drückrollen 7 an den Rohling 8 herangefahren (obere Hälfte von Fig. 2). Die um ihre Achse 7A rotierenden Drückrollen 7 werden auf das Formwerkzeug zu und an seiner Mantelfläche entlang bewegt, so daß der überstehende Rand 8a des Rohlings 8 auf die Umfangsfläche des Formwerkzeuges 1 umgelegt wird und auf der Mantelfläche gedrückwalzt wird, wobei das unter dem Druck der Drückrollen 7 flüssig werdende Material in die Verzahnung 3 des Formwerkzeuges 1 gepreßt wird. Bei dieser plastischen Kaltverformung wird die Dicke des Rohlinges 8 verringert und die Fläche durch Ausziehen des Materials vergrößert. Wird ein anderes Formwerkzeug eingesetzt, dessen Verzahnung in Achsrichtung eine größere Länge aufweist, so wird die Dicke des Rohlinges erhöht, um die benötigte Wandstärke des fertigen Werkstückes zu erhalten. In der unteren Hälfte von Fig. 2 ist eine Drückrolle 7 in Endstellung nach dem Drückwalzen gezeigt. Der Rohling 8 ist zu einem hülsenförmigen Halbzeug 9 umgeformt.

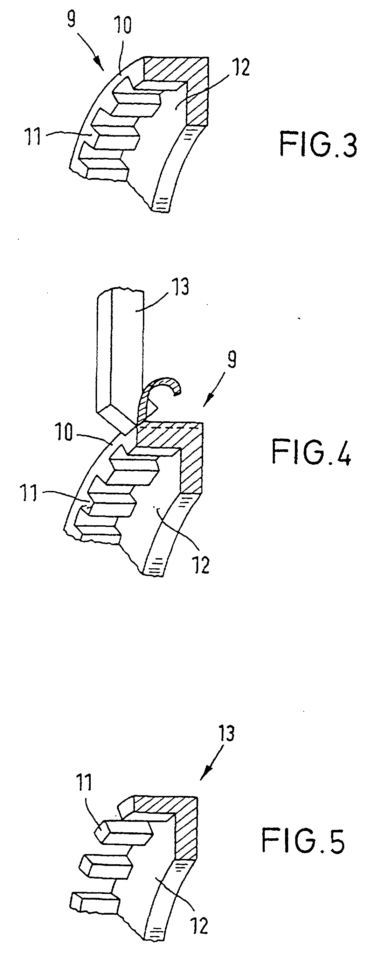

In Fig. 3 ist ein Ausschnitt des Halbzeuges 9, das bei dem Drückwalzvorgang hergestellt wurde, gezeigt. Das Halbzeug 9 ist hülsenförmig, wobei von der Umfangsfläche 10 Zähne 11 nach innen stehen. An einem Ende des Halbzeuges 9 gehen die Zähne 11 in eine Stirnwand 12 über. Die Stirnwand 12 kann als Flansch, der sich in den Innenraum der Hülse erstreckt, oder auch als Scheibe, die die Öffnung der Hülse verschließt, ausgebildet sein.

Die Zähne 11 können je nach Verwendung des Werkstückes unterschiedlich ausgebildet sein. Z.B. können sie einen kreisringsegmentförmigen Querschnitt aufweisen, d.h. daß die äußeren und inneren Umfangsflächen durch konzentrische Radien gebildet werden, während die Seitenflächen von radialen Ebenen gebildet werden. Die Seitenflächen können z.B. auch von parallelen Ebenen gebildet werden, die vorzugsweise parallel zu einer mittig durch den Zahn 11 verlaufenden radialen Ebene sind. Die Länge der Zähne 11 ist frei wählbar.

Anhand von Fig. 4 wird die Drehoperation näher beschrieben, die aus dem hülsenförmigen, an seiner Innenseite Zähne 11 aufweisenden Halbzeug 9 ein stirnverzahntes Werkstück 13 formt. Nachdem das Halbzeug 9 auf einer Drehmaschine eingespannt worden ist, wird ein Drehmeißel 13 an das rotierende Halbzeug 9 herangeführt und die Umfangsfläche 10 abgetragen, so daß die einzelnen Zähne 11 freigelegt werden und nur noch an der Stirnfläche 12 gehalten werden.

In Fig. 5 ist das fertiggestellte Werkstück 13 gezeigt, das aus einer runden Stirnfläche 12, von der achsparallel Zähne 11 abstehen, besteht.

## Patentansprüche

1. Verfahren zur Herstellung eines stirnverzahnten Werkstückes (13) mit den folgenden Schritten:
- Verformen eines Rohlings (8) durch Drückwalzen zu einem hülsenförmigen innenverzahnten Halbzeug (9), dessen Zähne (11) in eine Stirnwand (12) übergehen und parallel zu der Längsachse des Halbzeuges (9) verlaufen,
- Abdrehen der die Zähne (11) umgebenden Umfangsfläche (10) des Halbzeuges (9), so daß bei dem Werkstück (13) die Zähne (11) einzeln von der Stirnwand (12) abstehen.

2. Verfahren nach Anspruch 1, **dadurch gekennzeichnet, daß** der Rohling (8) ringförmig ist, und daß zum Drückwalzen des Rohlings (8) sein äußerer Flächenbereich auf ein zylinderförmiges, eine Verzahnung (3) aufweisendes Formwerkzeug (1) umgelegt wird.

## Claims

1. Process for producing a spur-cut workpiece (13), comprising the following steps:
- shaping a blank (8) by flow-turning it to make a sleeve-shaped, internally geared semi-finished product (9), the teeth (11) of which merge into a face wall (12) and run parallel to the longitudinal axis of the semi-finished product (9),
- turning off the circumferential surface (10) of the semi-finished product (9), said surface (10) surrounding the teeth (11), with the result that on the workpiece (13) the teeth (11) stand out individually from the face wall (12).

2. Process according to claim 1, **characterised in that** the blank (8) is annular in shape, and that to flow-turn the blank (8) its external surface region is transferred onto a cylindrical shaping tool (1) incorporating a set of toothing (3).

## Revendications

1. Procédé pour la fabrication d'une pièce à oeuvrer (13) à denture frontale, comportant les étapes suivantes :
- on déforme par fluotournage une ébauche (8) en un demi-produit (9) en forme de douille à denture intérieure, dont les dents (11) se transforment en une paroi frontale (12) et s'étendent parallèlement à l'axe longitudinal du demi-produit (9),
- on usine au tour la surface périphérique (10), entourant les dents (11), du demi-produit (9) de telle sorte que les dents (11) font saillie individuellement de la paroi frontale (12) de la pièce (13).

2. Procédé selon la revendication 1, **caractérisé en ce que** l'ébauche (8) est de forme annulaire, et **en ce que** pour le fluotournage de l'ébauche (8) on rabat sa zone de surface extérieure sur un outil de formage (1) de forme cylindrique présentant une denture (3).
